# EUROPEAN PATENT APPLICATION

(11) **EP 4 465 506 A1**
(43) Date of publication of application: **20.11.2024**
(21) Application number: 24155318.9
(22) Date of filing: 01.02.2024
(51) Int. Cl.: H02K 15/04, H02K 15/06

(54) **EFFECTIVE FLAT COPPER WIRE STATOR WIRE COILING DEVICE**

(30) Priority: 17.05.2023 CN 202310556952
(71) Applicant: UPTEC Intelligent Manufacturing (Wuxi) Co., Ltd., Wuxi City, Jiangsu Province 214000 (CN)
(72) Inventor: YE, Xin, Wuxi City, Jiangsu Province 214000 (CN); ZHOU, Liangliang, Wuxi City, Jiangsu Province 214000 (CN); XU, Lei, Wuxi City, Jiangsu Province 214000 (CN); TANG, Shang, Wuxi City, Jiangsu Province 214000 (CN); XU, Jianhai, Wuxi City, Jiangsu Province 214000 (CN)
(74) Representative: Longoni, Alessandra

(57) **Abstract**

The present invention discloses an effective flat copper wire stator wire coiling device, relating to the technical field of hairpin motors. The stator wire coiling device includes a tooling for arranging a flat copper wire, a winding mechanism for winding the arranged flat copper wire, a flat copper wire conveying mechanism and a tooling conveying mechanism. The tooling conveying mechanism is configured to convey the tooling to the winding mechanism. The flat copper wire conveying mechanism is configured to convey, to the winding mechanism for winding, the flat copper wire arranged on the tooling conveyed to the winding mechanism. In the present invention, through cooperation between the tooling conveying mechanism and the flat copper wire conveying mechanism, the arranged flat copper wire can be conveyed into the winding mechanism for winding.

## Description

### FIELD OF TECHNOLOGY

The present invention relates to the technical field of hairpin motors, and in particular to an effective flat copper wire stator wire coiling device.

### BACKGROUND

Hairpin permanent magnet synchronous motors are being gradually applied on a large scale in the domestic drive motor market. Compared with the traditional wire-wound motors, since the hairpin copper wire is flat, the hairpin motor is smaller in size and higher in power under the same power, and thus is the trend of the next-generation new energy drive motor. Traditionally, the copper wire is inserted into the core manually, which is inefficient. Automatic wire insertion has gradually become the future trend of assembling of the flat copper wire of the hairpin permanent magnet synchronous motor due to its high efficiency, high flexibility and intelligence. At present, when winding and coiling the flat copper wire on the stator core of the hairpin permanent magnet synchronous motor, since the flat copper wire is hairpin-shaped, it is required to continuously wind the flat copper wire on the stator core manually during production. This is low in processing efficiency and requires high labor intensity, so the wire coiling operation of the stator core cannot be performed continuously, thus failing to meet the need for mass production.

In order to solve the above problems, Chinese Application No. CN202211092185.4 discloses a flat copper wire stator wire coiling device, including a worktable, and a transplanting mechanism, a rotating mechanism and a limiting mechanism disposed on the worktable. The transplanting mechanism includes a lifting assembly slidably disposed on the worktable, a transplanting plate connected to an upper end of the lifting assembly, and a cartridge holder fixed on the transplanting plate. The rotating mechanism includes a base fixed to the worktable, a driving member connected to the base, and a driven member disposed on the worktable. Although the wire coiling operation of the stator core is performed mechanically and continuously and the production efficiency is improved, this flat copper wire stator wire coiling device cannot wind the flat copper wire effectively.

Therefore, it is necessary to provide an effective flat copper wire stator wire coiling device to solve the above problems.

### SUMMARY

An objective of the present invention is to provide an effective flat copper wire stator wire coiling device, so as to solve the problem that the existing flat copper wire stator wire coiling device cannot wind the flat copper wire effectively.

In order to achieve the above objective, the present invention specifically adopts the following technical solution.

An effective flat copper wire stator wire coiling device includes a tooling for arranging a flat copper wire, a winding mechanism for winding the arranged flat copper wire, a flat copper wire conveying mechanism and a tooling conveying mechanism that are disposed on the stator wire coiling device.

The tooling conveying mechanism is configured to convey the tooling to the winding mechanism.

The flat copper wire conveying mechanism is configured to convey, to the winding mechanism for winding, the flat copper wire arranged on the tooling conveyed to the winding mechanism.

Further, the tooling conveying mechanism includes a wire body for conveying the tooling.

Further, the flat copper wire conveying mechanism includes a wire routing portion slidable along a left-right direction and configured to convey the flat copper wire on the tooling to the winding mechanism, and a wire guiding portion slidable along the left-right direction and configured to prevent the flat copper wire wound by the winding mechanism from coming off.

Further, the stator wire coiling device further includes a positioning portion for mounting the winding mechanism. The positioning portion is configured to adjust a position of the winding mechanism, and the winding mechanism is mounted and removed by a manipulator.

Further, the winding mechanism further includes a wire coiling portion. The wire coiling portion including a winding assembly for winding the flat copper wire. The winding assembly is driven to rotate by a third driving assembly. The winding assembly has variable inner and outer diameters.

Further, the winding assembly includes a sleeve provided with a plurality of insertion slots. An inside of each of the insertion slot is slidably connected with an insertion piece along a height direction of the insertion slot, and a space for winding the flat copper wire is formed between every two of the insertion pieces. The sleeve is slidably provided in an axial direction with at least two umbrella-shaped members for driving the insertion pieces to slide.

Further, the winding mechanism further includes a wire holding assembly for holding the winding assembly that has wound the flat copper wire.

Further, the tooling conveying mechanism further includes a lifting portion slidable along the left-right direction and configured to lift the tooling, so as to accurately convey the flat copper wire on the tooling to the winding assembly for winding.

Further, the wire routing portion includes a wire transfer assembly configured to convey the flat copper wire on the tooling to the winding assembly. The wire transfer assembly is driven to move up and down by a first driving assembly.

Further, the wire guiding portion is driven to move up and down by a second driving assembly.

Compared with the prior art, the present invention has the following beneficial effects.
1. In the present invention, through cooperation between the tooling conveying mechanism and the flat copper wire conveying mechanism, the arranged flat copper wire can be conveyed into the winding mechanism for winding.
2. In the present invention, through cooperation between the wire routing portion and the wire guiding portion, the flat copper wire can be conveyed, and the wound flat copper wire can be prevented from coming off.
3. In the present invention, through cooperation of the insertion pieces, the insertion slots and the umbrella-shaped members, the outer diameter of the winding assembly can be adjusted, so that the flat copper wire can be wound more effectively.
4. In the present invention, by disposing the wire transfer assembly and the wire guiding portion that can slide left and right and move up and down, the flat copper wire can be accurately conveyed into the winding assembly when being wound, so that the flat copper wire can be wound more effectively.

### BRIEF DESCRIPTION OF THE DRAWINGS

FIG. 1 is a schematic three-dimensional view of the structure of the present invention;
FIG. 2 is a schematic three-dimensional view of the present invention in which a wire routing portion and a wire guiding portion are in a combined state;
FIG. 3 is a schematic three-dimensional view of the present invention in which a tooling, a wire coiling portion, a wire transfer assembly and a wire guiding block are in a combined state;
FIG. 4 is a schematic three-dimensional view of the wire coiling portion in the present invention;
FIG. 5 is a schematic three-dimensional view of a wire holding assembly in the present invention;
FIG. 6 is a schematic three-dimensional view of the present invention in which a winding assembly and a cover plate in a combined state;
FIG. 7 is a schematic three-dimensional view of the present invention in which the umbrella-shaped members and the insertion pieces are separated from the sleeve;
FIG. 8 is a partial three-dimensional cutaway view of a locking assembly in the present invention;
FIG. 9 is a schematic three-dimensional view of a lifting portion in the present invention;
FIG. 10 is a schematic three-dimensional view of a positioning portion in the present invention; and
FIG. 11 is a schematic three-dimensional view of the present invention in which a hollow reducer and the sleeve are separated from a servo motor.

Reference signs: 1, wire body; 10, fixed frame; 11, sliding slot; 12, servo motor; 13, hollow reducer; 2, tooling; 3, wire routing portion; 30, first assembling stand; 31, first cylinder; 32, second cylinder; 33, wire transfer assembly; 34, sliding plate; 35, baffle; 36, first motor; 37, conveyor belt; 4, wire guiding portion; 40, second assembling stand; 41, third cylinder; 42, wire guiding block; 43, fourth cylinder; 5, wire coiling portion; 50, mounting seat; 51, fifth cylinder; 52, fourth driving assembly; 53, insertion slot; 54, sliding seat; 55, winding assembly; 56, rotating shaft; 57, sleeve; 58, insertion piece; 59, umbrella-shaped member; 6, lifting portion; 60, slide rail; 61, sliding plate; 62, horizontal plate; 63, positioning rod; 64, rack; 65, third motor; 66, first gear; 67, sixth cylinder; 7, positioning portion; 70, fixed plate; 71, seventh cylinder; 72, eighth cylinder; 73, movable block; 74, alignment block; 8, wire holding assembly; 80, base; 81, tenth cylinder; 82, eleventh cylinder; 83, first swing arm; 84, second swing arm; 85, driving gear; 86, driven gear; 87, belt; 9, locking assembly; 90, ninth cylinder; 91, steel ball; 92, adapter; 93, sliding sleeve.

### DESCRIPTION OF THE EMBODIMENTS

The technical solutions in the embodiments of the present invention will be clearly and completely described below with reference to the accompanying drawings in the embodiments of the present invention. It is apparent that the described embodiments are only a part, rather than all of the embodiments of the present invention. All other embodiments obtained by those of ordinary skill in the art based on the embodiments of the present invention without creative work are within the protection scope of the present invention as claimed.

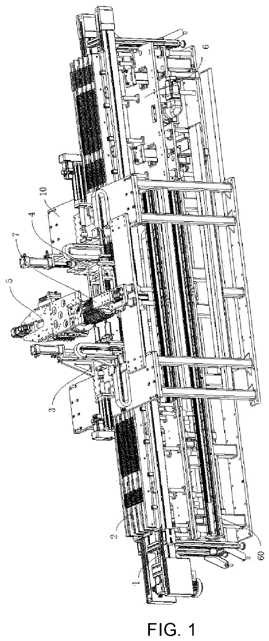

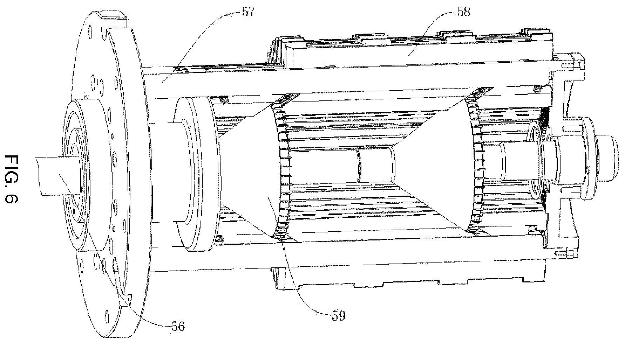

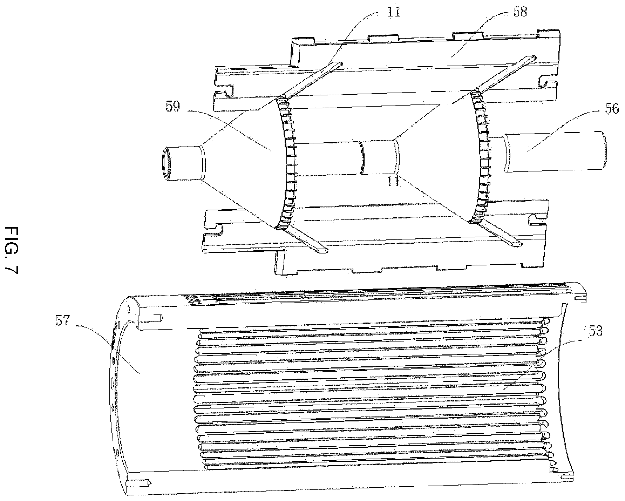

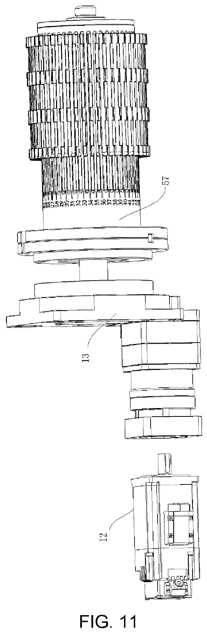

Referring to FIG. 1 to FIG. 11, an effective flat copper wire stator wire coiling device, includes a tooling 2 for arranging a flat copper wire, a winding mechanism for winding the arranged flat copper wire, a flat copper wire conveying mechanism and a tooling conveying mechanism that are disposed on the stator wire coiling device.

The tooling conveying mechanism is configured to convey the tooling 2 to the winding mechanism. The winding mechanism is disposed on a fixed frame 10, and the tooling conveying mechanism is disposed below the winding mechanism.

The flat copper wire conveying mechanism is configured to convey, to the winding mechanism for winding, the flat copper wire arranged on the tooling 2 conveyed to the winding mechanism. The flat copper wire conveying mechanism is disposed on the fixed frame 10 and distributed on two sides of the winding mechanism.

In this embodiment, through cooperation between the tooling conveying mechanism and the flat copper wire conveying mechanism, the arranged flat copper wire can be conveyed into the winding mechanism for winding.

Specifically, as shown in FIG. 1, the tooling conveying mechanism includes a wire body 1 for conveying the tooling 2. The tooling 2 includes a wire arranging plate and a tray assembly. The wire arranging plate is located on the tray assembly. Both sides of the tray assembly are provided with adjusting assemblies, and the adjusting assembly can push the tray assembly to contact the flat copper wire on the wire arranging plate, so that the flat wire is aligned. When in use, according to the winding requirement, flat copper wires with different specifications are arranged on the wire arranging plate, and the adjusting assembly pushes the tray assembly to contact the flat copper wire on the wire arranging plate until two ends of the flat copper wire are aligned. Then, the adjusting assembly returns to its original position, and the tray assembly returns to its original position and does not contact the flat copper wire any longer, which facilitates the subsequent winding. A sliding belt is disposed on the wire body 1. The tray assembly is located on the sliding belt. The sliding belt is driven by a driving assembly so as to drive the whole tooling 2 to move.

Specifically, as shown in FIG. 1, the flat copper wire conveying mechanism includes a wire routing portion 3 slidable along a left-right direction and configured to convey the flat copper wire on the tooling 2 to the winding mechanism, and a wire guiding portion 4 slidable along the left-right direction and configured to prevent the flat copper wire wound by the winding mechanism from coming off. The wire routing portion 3 and the wire guiding portion 4 are distributed on the fixed frame 10 on the two sides of the winding mechanism. The wire routing portion 3 includes a wire transfer assembly 33 configured to convey the flat copper wire on the tooling 2 into the winding assembly. The wire transfer assembly 33 is driven to move up and down by a first driving assembly.

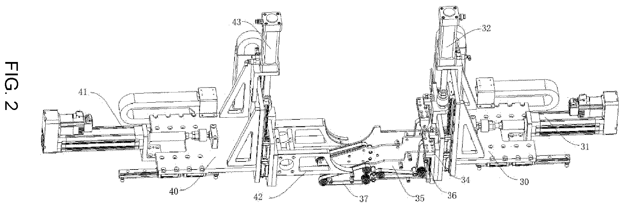

As shown in FIG. 2, the wire routing portion 3 includes a first assembling stand 30, a first cylinder 31, a first driving assembly and a wire transfer assembly 33. The first driving assembly is a second cylinder 32. The first assemblingstand 30 is a right-angle plate. The right-angle plate is divided into a longitudinal plate and a transverse plate. The transverse plate is slidably disposed on the fixed frame 10 on the two sides of the winding mechanism along the left-right direction. The first cylinder 31 is fixedly connected to the fixed frame 10 on the side of the wire routing portion 3. An output end of the first cylinder 31 is fixed on the transverse plate, so as to push the transverse plate to move toward or away from one side of the winding mechanism. The longitudinal plate is disposed at one end of the transverse plate facing the winding mechanism. An upper end of the longitudinal plate is fixedly connected with the second cylinder 32 with an output end facing downward. The wire transfer assembly 33 is fixedly connected to the output end of the second cylinder 32, and the wire transfer assembly 33 is slidably disposed on the longitudinal plate, so as to ensure the wire transfer assembly 33 to move more stably. The second cylinder 32 can adjust a height position of the wire transfer assembly 33 in a vertical direction so as to adapt to the position of the winding mechanism, which facilitates accurate cooperation with the winding mechanism.

As shown in FIG. 2, the wire guiding portion 4 includes a second assembling stand 40, a third cylinder 41, a wire guiding block 42 and a second driving assembly. The second assembling stand 40 is a right-angle plate in a same shape as the first assembling stand 30. The second driving assembly is a fourth cylinder 43. The arrangement of the second assembling stand 40, the third cylinder 41 and the fourth cylinder 43 is the same as that of the first assembling stand 30, the first cylinder 31 and the second cylinder 32. However, the wire guiding portion 4 and the wire routing portion 3 are distributed in mirror symmetry with respect to the winding mechanism, and thus, there are some differences. The wire guiding block 42 is fixedly connected to the output end of the second cylinder 32, and the wire guiding block 42 is slidably disposed on a longitudinal plate of the second assembling stand 40 in the shape of the right-angle plate, so as to ensure the wire guiding block 42 to slide stably. Through cooperation between the third cylinder 41 and the fourth cylinder 43, the wire guiding block 42 can be at the best working position when the winding mechanism works. The wire guiding block 42 functions to prevent the flat copper wire from coming off when the winding mechanism winds the flat copper wire. Thus, a surface of the wire guiding block 42 that cooperates with the winding mechanism should be a curved surface having the same radian as the rotation track of the winding mechanism, and an upper end of the curved surface should be higher than the horizontal plane of the axis of the winding mechanism, so that the curved surface can be attached to the winding mechanism more closely.

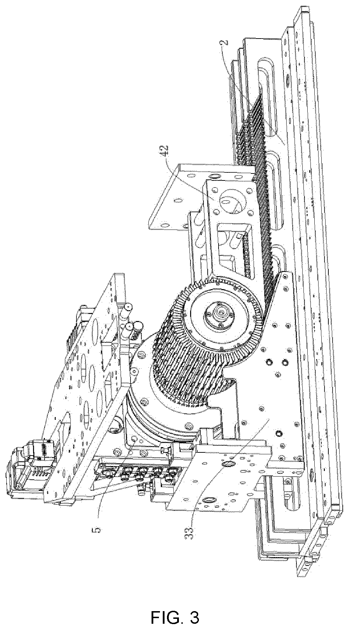

As shown in FIG. 2 and FIG. 3, there are provided two wire transfer assemblies 33. Each wire transfer assembly 33 includes a sliding plate 34, two baffles 35, a first motor 36 and a conveyor belt 37. A side of the baffle 35 facing the winding mechanism is also a curved surface. The sliding plate 34 is slidably disposed on the longitudinal plate of the first assembling stand 30 in the shape of the right-angle plate. The first motor 36 and the conveyor belt 37 are both disposed between the two baffles 35. The first motor 36 drives the conveyor belt 37 to move under the cooperation of rollers. The conveyor belt 37 is inclined as a whole. One end of the conveyor belt 37 facing the sliding plate 34 is higher than the other end, and an upper end of the conveyor belt 37 should have a smooth transition with the curved surface on the baffle 35, so that the flat copper wire can be conveyed better.

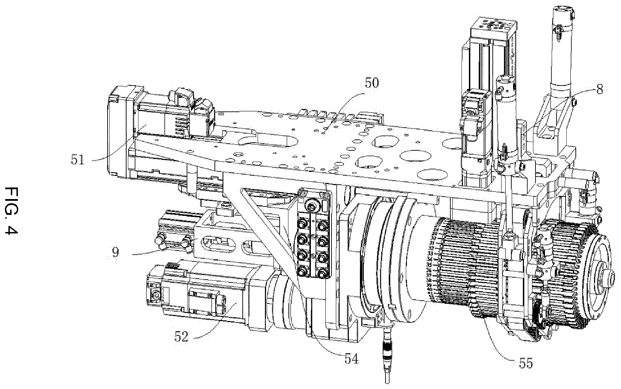

Specifically, as shown in FIG. 3 and FIG. 4, the stator wire coiling device further includes a positioning portion 7 for mounting the winding mechanism. The positioning portion 7 is configured to adjust a position of the winding mechanism. The winding mechanism further includes a wire coiling portion 5. The wire coiling portion 5 includes a winding assembly 55 configured to wind the flat copper wire. The wire coiling portion 5 is detachably mounted on a manipulator. During wire coiling, the manipulator puts the wire coiling portion 5 at a winding station. After the wire coiling is completed, the manipulator directly transfers the wire coiling portion 5 to the corresponding station of the subsequent flat copper wire processing process. The winding assembly 55 is driven to rotate by a third driving assembly. The winding assembly 55 has variable inner and outer diameters. The winding assembly 55 includes a sleeve 57 provided with a plurality of insertion slots 53. Two ends of the sleeve 57 are fixedly connected with cover plates. An inside of each of the insertion slots 53 is slidably connected with an insertion piece 58 along a height direction of the insertion slot 53. The plurality of insertion pieces 58 and insertion slots 53 are distributed in an annular array. A space for winding the flat copper wire is formed between every two of the insertion pieces 58. The sleeve 57 is slidably provided in an axial direction with at least two umbrella-shaped members 59 for driving the insertion pieces 58 to slide. The umbrella-shaped members 59 are fixed on a rotating shaft 56 which coincides with a central axis of the sleeve 57. A side of the insertion piece 58 facing the rotating shaft 56 is provided with a sliding slot 11 which is inclined at a certain angle. One end of the umbrella-shaped member 59 with a large opening is fixedly connected with an extension rod inserted into the sliding slot 11. Two ends of the rotating shaft 56 are slidably connected to the two cover plates, so that the outer diameter formed by the insertion pieces 58 can be changed by changing the positions of the insertion pieces 58 in the insertion slots 53.

As shown in FIG. 3 and FIG. 4, the wire coiling portion 5 further includes a mounting seat 50, a fifth cylinder 51, a fourth driving assembly 52, a locking assembly 9 and a sliding seat 54. The mounting seat 50 is controlled by the manipulator, so that the wire coiling portion 5 is controlled to be removed and mounted. The fourth driving assembly 52 includes a servo motor 12 and a hollow reducer 13. An input shaft of the hollow reducer 13 is fixedly connected to an output shaft of the servo motor 12. An output end of the hollow reducer 13 is fixed with the cover plate on the side of the winding assembly 55 facing the fifth cylinder 51, so that the servo motor 12 can drive the sleeve 57 to rotate through the hollow reducer 13.

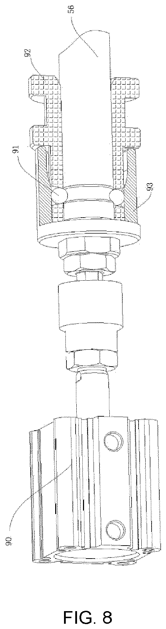

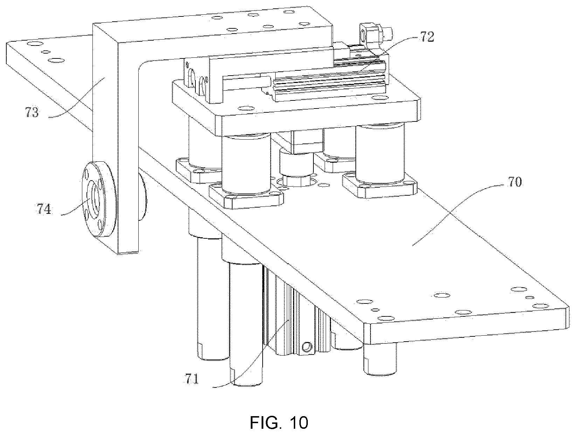

As shown in FIG. 8 and FIG. 10, the sliding seat 54 is slidably connected to a lower end of the mounting seat 50 along a front-rear direction, and the locking assembly 9 is disposed on the sliding seat 54. The locking assembly 9 includes a ninth cylinder 90, a steel ball 91, an adapter 92 and a sliding sleeve 93. The fifth cylinder 51 is fixedly mounted at a rear end of the mounting seat 50. An output end of the fifth cylinder 51 is fixed on the sliding seat 54 so as to drive the sliding seat 54 to slide in the front-rear direction. A middle of the sliding seat 54 is fixedly connected with the adapter 92. The rotating shaft 56 runs through the cover plate and is rotatably connected to an inner side surface of the adapter 92, and the other end of the rotating shaft 56 is slidably connected to an inside of a hollow cylinder. The hollow cylinder is fixed to an inner side of the cover plate at the end of the sleeve 57 away from the adapter 92, so that the rotating shaft 56 can support the winding assembly 55 more stably. The ninth cylinder 90 is fixedly connected to the sliding seat 54. The sliding sleeve 93 is sleeved outside the adapter 92. One end of the sliding sleeve 93, away from the adapter 92, is fixed to an output end of the ninth cylinder 90. Axes of the rotating shaft 56, the sliding sleeve 93 and the adapter 92 are all on a same axial line. The adapter 92 runs through the sliding seat 54. The sliding sleeve 93 is sleeved on one end of the adapter 92. The rotating shaft 56 runs into the other end of the adapter 92. In this case, while the rotating shaft 56 slides back and forth along the front-rear direction, the rotating shaft 56 can also rotate together with the sleeve 57. A side of the adapter 92 facing the sliding sleeve 93 is movably connected with the steel ball 91. An end of the rotating shaft 56, facing the sliding sleeve 93, is provided with an annular groove for the steel ball 91 to roll. A rear end of the inner side surface of the sliding sleeve 93 is provided with a protrusion for pressing the steel ball 91, so that the steel ball 91 runs through the adapter 92 and is clamped in the annular groove at the end of the rotating shaft 56.

With this arrangement, when the winding assembly needs to be removed, the ninth cylinder 90 retracts, and the sliding sleeve 93 is pulled back from the adapter 92. When the rotating shaft 56 is pulled out of the adapter 92, most of the steel ball 91 is pressed into the sliding sleeve 93 by the adapter 92, so that the winding assembly 55 can be removed quickly.

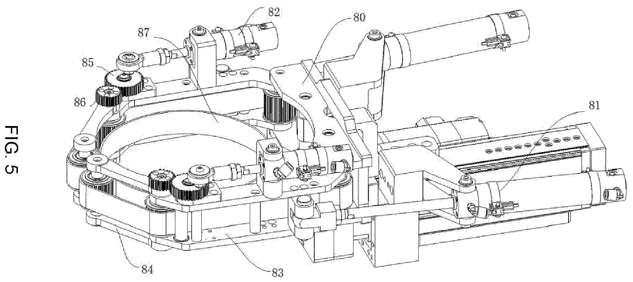

Specifically, as shown in FIG. 5, the winding mechanism further includes a wire holding assembly 8 for holding the winding assembly 55 that has wound the flat copper wire. The wire holding assembly 8 includes a base 80, a first mounting block symmetrically and fixedly connected to an upper end surface of the mounting seat 50, a tenth cylinder 81 hinged on the first mounting block, a first swing arm 83 rotatably connected to two sides of the bottom of the base 80, a second swing arm 84 rotatably connected to an end of the first swing arm 83 away from the base 80, a second mounting block fixedly connected to the second swing arm 84, an eleventh cylinder 82 hinged on the second mounting block, a driving gear 85, a driven gear 86 and a belt 87. The base 80 is disposed on a lower end surface of the mounting seat 50.

An output end of the tenth cylinder 81 is rotatably connected with the first swing arm 83. The driving gear 85 is rotatably disposed at one end of the first swing arm 83 away from the base 80. The driven gear 86 is rotatably connected to the hinge between the first swing arm 83 and the second swing arm 84, and an axis of the driven gear 86 is coaxial with the hinge between the first swing arm 83 and the second swing arm 84. The driving gear 85 meshes with the driven gear 86. A center of circle of a disk surface of the driving gear 85, axially away from the driving gear 85, is provided with a connecting post. An output end of the eleventh cylinder 82 is rotatably connected with the connecting post. An end of the belt 87 is connected to a side of the second swing arm 84 facing away from the center of the winding assembly 55. When the tenth cylinder 81 and the eleventh cylinder 82 drive the first swing arm 83 and the second swing arm 84 to hold the winding assembly 55, the belt 87 wraps the outer side surface of the winding assembly 55, thereby preventing the flat copper wire from coming off.

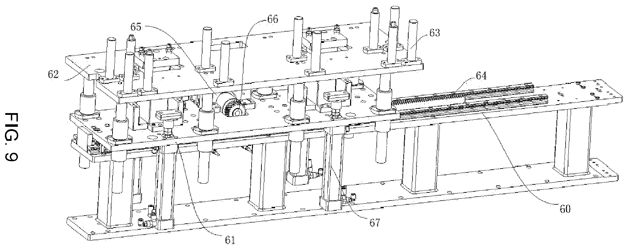

Specifically, as shown in FIG. 9, the tooling conveying mechanism further includes a lifting portion 6 slidable along the left-right direction and configured to lift the tooling 2, so as to accurately convey the flat copper wire on the tooling 2 to the winding assembly 55 for winding. The lifting portion 6 includes an underframe, slide rails 60 symmetrically and fixedly connected to the underframe, a sliding plate 61 slidably connected to the slide rails 60, a horizontal plate 62 slidably disposed on the sliding plate 61 along the up-down direction, a positioning rod 63 fixedly connected to the horizontal plate 62, a rack 64 fixedly connected to the underframe, a third motor 65 fixedly connected to the sliding plate 61, a first gear 66 fixedly connected to an output shaft of the third motor 65, and a sixth cylinder 67 fixedly connected to a lower end surface of the sliding plate 61. An output shaft of the sixth cylinder 67 runs through the sliding plate 61, so as to drive the horizontal plate 62 to slide upward. The first gear 66 meshes with the rack 64. The third motor 65 is configured to drive the first gear 66 to rotate. Under the cooperation between the first gear 66 and the rack 64, the sliding plate 61 makes a linear reciprocating motion along the slide rails 60. When the tooling 2 slides towards the wire coiling portion 5 along the wire body 1, the sixth cylinder 67 lifts the horizontal plate 62, so that the positioning rod 63 lifts the tooling 2 away from the wire body 1, and the horizontal plate 62 slides towards the wire coiling portion 5 along the slide rails 60. In order to improve the working efficiency, another lifting portion 6 may continue to transfer the tooling 2, and the previous lifting portion 6 continues to receive a new tooling 2, thereby ensuring the continuity of the winding.

Specifically, as shown in FIG. 3, FIG. 6 and FIG. 7, a fixed plate 70 is fixedly connected to the fixed frame 10 at a front end of the winding assembly 55. A seventh cylinder 71 is fixedly connected to a lower end of the fixed plate 70. An output end of the seventh cylinder 71 runs through the fixed plate 70 and is fixedly connected with a transition plate. An eighth cylinder 72 is fixedly connected to the transition plate, so that a height and a position in the front-rear direction of the whole wire coiling portion 5 can be adjusted. Thus, the wire coiling portion 5 can be located at a center of the flat copper wire conveying mechanism, so that the winding assembly 55 can better cooperate with the curved surfaces on the wire routing portion 3 and the wire guiding portion 4, thereby effectively preventing the flat copper wire from coming off. An output end of the eighth cylinder 72 faces the winding assembly 55 and is fixedly connected with a movable block 73. An end of the movable block 73 facing the winding assembly 55 is rotatably connected with an alignment block 74 configured to be clamped with the cover plate at a side of the sleeve 57 facing the movable block 73. A side of the alignment block 74 facing the winding assembly 55 is provided with at least two grooves, and the cover plate at the side of the sleeve 57 facing the movable block 73 is provided with at least two inserts distributed in the same way as the grooves. When the wire coiling portion 5 is placed on the fixed frame 10, the seventh cylinder 71 lifts the fixed plate 70, and the eighth cylinder 72 adjusts a height position of the alignment block 74. Then, the eighth cylinder 72 pushes the movable block 73 toward the wire coiling portion 5, so that the grooves are sleeved on the inserts, and thus, the alignment block 74 is clamped with the cover plate. Thereby, through the control of the seventh cylinder 71 and the eighth cylinder 72, the wire coiling portion 5 is centrally aligned, so that the wire coiling portion 5 is at the proper winding position, thereby ensuring the later winding effect.

**Working principle:** First, the flat copper wire is arranged on the tooling 2 by the manipulator, and the tooling 2 is conveyed through the wire body 1. After the tooling is conveyed to a certain position, the sixth cylinder 67 extends to lift the tooling 2. After the tooling is lifted to a certain position, the third motor 65 is started to drive the first gear 66 to rotate. Under the cooperation of the rack 64, the sliding plate 61 drives the whole lifting portion 6 to slide to the lower end of the winding assembly 55 along the slide rails 60. The position of the winding assembly 55 is adjusted through the positioning portion 7, the wire guiding portion 4 and the wire routing portion 3, so that the insertion pieces 58 in the winding assembly 55 can be attached to the curved surfaces. Then, the first motor 36 in the wire routing portion 3 is started, and at the same time, the servo motor 12 is also started, so that the conveyor belt 37 is driven to convey the flat copper wire into the winding assembly 55 and the winding assembly 55 starts to wind the flat copper wire. Due to arrangement of the curved surfaces, after the winding assembly 55 wind by one turn, the flat copper wire will not come off from the gap between the two insertion pieces 58. At the same time, the wire holding assembly 8 is started, so that the tenth cylinder 81 extends to drive the first swing arm 83 to rotate. At the same time, the eleventh cylinder 82 extends and retracts back and forth, so that the eleventh cylinder 82 drives the driving gear 85 to rotate, and the driving gear 85 drives the driven gear 86 to rotate. Thereby, the second swing arm 84 is driven to rotate, and the belt 87 is wound outside the winding assembly 55, thereby further preventing the flat copper wire from coming off. After the winding assembly is held, the wire coiling portion 5 is directly transferred by the manipulator. When the winding portion is transferred to a wire insertion station during the stator processing process, the wire holding assembly 8 is released, so that the flat copper wire winding is inserted into the wire insertion tooling in the corresponding wire insertion station. Then, the wire coiling portion 5 is replaced with the next one by another manipulator.

While replacing the wire coiling portion 5, the wire coiling portion 5 is controlled by another manipulator such that the insert facing the positioning portion 7 is inserted into the alignment block 74, thereby completing the mounting of the wire coiling portion 5. Then, the height and the position along the front-rear direction of the wire coiling portion 5 are respectively adjusted by the seventh cylinder 71 and the eighth cylinder 72, so that the winding assembly 55 can cooperate with the wire routing portion 3, the wire guiding portion 4, the lifting portion 6 and the tooling 2. Two manipulators work alternately, so that there is no need to frequently replace the wire coiling portion 5.

While adjusting the position of the insertion piece 58 in the insertion slot 53, the fifth cylinder 51 is controlled to extend and retract so as to push the sliding seat 54 to slide along the mounting seat 50, so that the mounting seat 50 drives the adapter 92 to slide. Thus, the adapter 92 drives the rotating shaft 56 to slide, so that the rotating shaft 56 drives the umbrella-shaped members 59 to slide, thereby adjusting the length of the extension rod extending into the sliding slot 11. Thereby, the position of the insertion piece 58 in the insertion slot 53 is adjusted, thereby changing the outer diameter of the winding assembly 55.

All the above-mentioned electronic components are electronic components commonly used in the prior art, and control methods thereof are all executed by an industrial personal computer.

The above is only preferred embodiments of the present invention, and is not intended to limit the present invention. The scope of patent protection of the present invention shall be subject to the claims. Any equivalent structural changes made by utilizing the contents of the specification and the accompanying drawings of the present invention shall be included in the scope of protection of the present invention as claimed.

## Claims

1. An effective flat copper wire stator wire coiling device, **characterized by** comprising a tooling (2) for arranging a flat copper wire, a winding mechanism for winding the arranged flat copper wire, a flat copper wire conveying mechanism and a tooling conveying mechanism that are disposed on the stator wire coiling device, wherein
the tooling conveying mechanism is configured to convey the tooling (2) to the winding mechanism; and
the flat copper wire conveying mechanism is configured to convey, to the winding mechanism for winding, the flat copper wire arranged on the tooling (2) conveyed to the winding mechanism.

2. The effective flat copper wire stator wire coiling device according to claim 1, **characterized in that** the tooling conveying mechanism comprises a wire body (1) for conveying the tooling (2).

3. The effective flat copper wire stator wire coiling device according to claim 1, **characterized in that** the flat copper wire conveying mechanism comprises a wire routing portion (3) slidable along a left-right direction and configured to convey the flat copper wire on the tooling (2) to the winding mechanism, and a wire guiding portion (4) slidable along the left-right direction and configured to prevent the flat copper wire wound by the winding mechanism from coming off.

4. The effective flat copper wire stator wire coiling device according to claim 1, **characterized in that** the stator wire coiling device further comprises a positioning portion (7) for mounting the winding mechanism, the positioning portion (7) being configured to adjust a position of the winding mechanism, and the winding mechanism being mounted and removed by a manipulator.

5. The effective flat copper wire stator wire coiling device according to claim 4, **characterized in that** the winding mechanism further comprises a wire coiling portion (5), the wire coiling portion (5) comprising a winding assembly (55) for winding the flat copper wire, the winding assembly (55) being driven to rotate by a third driving assembly, and the winding assembly (55) having variable inner and outer diameters.

6. The effective flat copper wire stator wire coiling device according to claim 5, **characterized in that** the winding assembly (55) comprises a sleeve (57) provided with a plurality of insertion slots (53), an inside of each of the insertion slots (53) being slidably connected with an insertion piece (58) along a height direction of the insertion slot (53), and a space for winding the flat copper wire being formed between every two of the insertion pieces (58), and the sleeve (57) being provided to slide in an axial direction with at least two umbrella-shaped members (59) for driving the insertion pieces (58) to slide.

7. The effective flat copper wire stator wire coiling device according to claim 5, **characterized in that** the winding mechanism further comprises a wire holding assembly (8) for holding the winding assembly (55) that has wound the flat copper wire.

8. The effective flat copper wire stator wire coiling device according to claim 3, **characterized in that** the tooling conveying mechanism further comprises a lifting portion (6) slidable along the left-right direction and configured to lift the tooling (2), so as to accurately convey the flat copper wire on the tooling (2) to the winding assembly (55) for winding.

9. The effective flat copper wire stator wire coiling device according to claim 6, **characterized in that** the wire routing portion (3) comprises a wire transfer assembly (33) configured to convey the flat copper wire on the tooling (2) to the winding assembly (55), the wire transfer assembly (33) being driven to move up and down by a first driving assembly.

10. The effective flat copper wire stator wire coiling device according to claim 9, **characterized in that** the wire guiding portion (4) is driven to move up and down by a second driving assembly.
